# EUROPÄISCHE PATENTSCHRIFT

(11) **EP 3 328 958 B1**
(45) Veröffentlichungstag und Bekanntmachung des Hinweises auf die Patenterteilung: **05.10.2022**
(21) Anmeldenummer: 16829894.1
(22) Anmeldetag: 16.06.2016
(51) Int. Cl.: C09J 183/04

(54) **VERWENDUNG EINES EIN- ODER MEHR-KOMPONENETENSYSTEMS ZUR BEFESTIGUNG VON VERANKERUNGSMITTELN**
USE OF A SINGLE OR MULTI COMPONENT SYSTEM FOR SECURING ANCHORING MEANS
UTILISATION D'UN SYSTÈME À UN OU À PLUSIEURS CONSTITUANTS POUR FIXER DES MOYENS D'ANCRAGE

(30) Priorität: 30.07.2015 DE 102015112459; 03.06.2016 DE 102016110272
(43) Veröffentlichungstag der Anmeldung: 06.06.2018
(73) Patentinhaber: fischerwerke GmbH & Co. KG, 72178 Waldachtal (DE)
(72) Erfinder: VOGEL, Martin, 79286 Glottertal (DE); SCHLENK, Christian, 79211 Denzlingen (DE); WEINELT, Christian, 79331 Teningen (DE); ZANDER, Lars, 84503 Altötting (DE)
(86) Internationale Anmeldenummer: PCT/EP2016/001012
(87) Internationale Veröffentlichungsnummer: WO 2017/016624

(56) Entgegenhaltungen:
- DE-A1-102011 006 130
- DE-A1-102011 081 264
- DE-A1-102012 214 427
- DE-A1-102012 223 139

## Beschreibung

Die Erfindung betrifft die Verwendung eines ein- oder mehrkomponentigen Befestigungs-Kunstharzes (Mehr- oder insbesondere Ein-Komponentensystem) für die Befestigung von Verankerungsmitteln in Löchern und Verfahren unter Verwendung des besagten Befestigungs-Kunstharzes, wie jeweils in den Ansprüchen (was insbesondere jeweils einzelne Ansprüche bedeutet) definiert.

Silan-terminierte Polymere sind grundsätzlich bekannt als feuchtigkeitsaushärtende Bindemittel, die für eine Reihe von Zwecken, darunter die Herstellung von Klebstoffen, verwendet werden.

Ein Nachteil silan-terminierter Polymere ist, dass sie als Bestandteile von Klebstoffen sehr lange Aushärtezeiten benötigen, um mit dem Wasser aus Luft und Umgebung zu reagieren und so auszuhärten. Um die Reaktivität derartiger Systeme zu erhöhen, müssten erhebliche Mengen an Katalysatoren, typischerweise toxikologisch bedenkliche Zinnkatalysatoren, eingesetzt werden. Die marktbekannten, vollständig ausgehärteten silan-terminierten Polymere sind außerdem sehr weich und dehnbar mit geringen E-Modulen, hohen Bruchdehnungen und geringen Zugfestigkeiten. Deshalb wurden für die chemische Befestigungstechnik entsprechende Systeme bisher noch nicht vorgestellt.

Die EP 2248781 beschreibt künstliche Mörtel auf Basis silanterminierter Harze. Hier sei darauf hingewiesen, dass das Harz kein "organisches" Harz ist mit einem organischen Kohlenstoff-Rückgrat, sondern ein "anorganisches" Silikonharz, das zwar organische Seitengruppen, aber ein anorganisches Si-O-Si-Rückgrat hat. Silikonharze als Bestandteile von 1K oder 2K-Massen wurden noch nicht beschrieben. Die DE 10 2011 081 264 beschreibt vernetzbare Massen auf Basis einer Kombination aus organyloxysilanterminierten Polymeren und Organyloxysilangruppen aufweisenden Silikonharzen, welche als durch Wasserzusatz aus Luft oder in einer separaten Komponente aushärtend beschrieben werden. Analoge Anmeldungen sind DE 10 2012 214 427 A1, DE 10 2012 223 139 A1 und DE 10 2011 006 130 A1.

Es wurde nun überraschend gefunden, dass kurze Aushärtezeiten und sehr gute mechanische Messwerte und Auszugswerte gefunden werden, wenn man mehrkomponentige oder insbesondere auch bereits wenn man einkomponentige Kunstharze auf Basis selektierter - mindestens eine hydrolysierbare an Si gebundene Gruppe beinhaltender - Silikonharze ggf. in Abmischung mit niedermolekularen aktiven Silanen verwendet. Hier konnte gegenüber den aus DE 10 2011 081 264 bekannten Abmischungen von Silikonharzen mit silanterminierten Polymeren sogar noch eine Steigerung der Härte und noch höhere Verbundfestigkeiten bei verbesserter chemischer Beständigkeit und höherer Temperaturbeständigkeit erreicht werden, ohne an Reaktivität und Aushärtegeschwindigkeit einzubüßen.

Überraschend reichen die Wassergehalte in Bausubstraten, wie insbesondere Beton und Ziegelsteinen, wie Hohlziegeln, sogar auch bei einem einkomponentigen System aus, um eine relativ zügige Härtung dieser einkomponentigen Systeme ohne den Einsatz toxikologisch bedenklicher Katalysatoren zu erreichen, und es werden sehr gute mechanische Werte und Auszugswerte erzielt. Daher ist, entgegen den Erwartungen des Fachmanns, die Verwendung in diesem Bereich zugänglich. Dies ist auch insofern überraschend, als der Anmelderin kein einkomponentiges System auf dem Markt bekannt ist, welches für den Einsatz zum Befestigen von Verankerungselementen im Baubereich vorgesehen ist.

Außerdem ermöglichen die Klebstoffe beim erfindungsgemäßen Einsatz die Herstellung temperatur- und feuchtigkeitsstabiler Verbünde zwischen der Wand von Löchern und Verankerungselementen.

Damit gehen insbesondere im Falle einkomponentiger Befestigungs-Kunstharze in der Anwendung erhebliche praktische Vereinfachungen einher, beispielsweise die Verwendung einfacher Behälter ohne Mehrkammersysteme, der Verzicht auf Statikmischer für mehrkomponentige Systeme mit deren immanenten Problematiken (beispielsweise Notwendigkeit kontinuierlicher Anwendung im Einsatz, um ein Erhärten im Statikmischer zu vermeiden; vollständige Durchmischung der Komponenten), sowie einfache Handhabbarkeit. Auch im Falle mehrkomponentiger Systeme bieten sich Vorteile, da als weitere Komponente lediglich eine (beispielsweise ökologisch unbedenkliche) wässrige Komponente möglich ist. Herauszuheben ist außerdem die gegenüber Abmischungen gemäß DE 10 2011 081 264 höhere Härte, das verbesserte Zugmodul, die gesteigerte Verbundfestigkeit sowie die größere Temperatur- und Chemikalienbeständigkeit.

Die Erfindung betrifft daher in einer ersten Ausführungsform die Verwendung eines ein- oder mehrkomponentiges Befestigungs-Kunstharzes auf Basis von einem - mindestens eine hydrolysierbare an Si gebundene Gruppe beinhaltenden Silikonharz, insbesondere einem Silikonharz beinhaltend Einheiten der Formel (I)

R¹ₐ(R²O)_{b}R³_{c}SiO(_{4-a-b-c)/2} (I)

worin
R¹ gleich oder verschieden sein kann und Wasserstoff, ein einwertiger SiC-gebundener C₁-C₁₈-Alkylrest, der unsubstituiert oder subsituiert sein kann, oder ein zweiwertiger C₁-C₁₈ Alkylrest, der ebenfalls unsubstituiert oder substituiert sein kann, der zwei Einheiten der Formel (I) verbrückt, ist;
R² gleich oder verschieden sein kann und Wasserstoff oder einen einwertigen C₁₋C₁₈-Alkylrest, der unsubstituiert oder substituiert sein kann, bedeutet,
R³ gleich oder verschieden sein kann und einen einwertigen, SiC-gebundenen aromatischen Kohlenwasserstoffrest, insbesondere Phenylrest, bedeutet, der jeweils unsubstituiert oder substituiert sein kann,
a gleich 0, 1, 2 oder 3 ist,
b gleich 0, 1, 2 oder 3, vorzugsweise 0, 1 oder 2, besonders bevorzugt 0 oder 1 ist, und c gleich 0, 1 oder 2, vorzugsweise 0 oder 1 ist,
mit der Maßgabe, dass die Summe aus a + b + c kleiner oder gleich 3 ist und vorzugsweise in mindestens 40 der Einheiten der Formel (I) die Summe aus b + c gleich 0 oder 1 ist;
und vorzugsweise mindestens einem niedermolekularen aktiven Silan ((= ein oder mehreren niedermolekularen aktiven Silanen) wie in Anspruch 1 oder einem der abhängigen Ansprüche definiert
zum Befestigen von Verankerungselementen in Löchern in wasserhaltigen Bausubstraten.

Überraschend wurde gefunden, dass zur hinreichend schnellen Aushärtung die aus DE 10 2011 081 264 bekannten Kombinationspartner in Form organyloxysilanterminierter Polymeren nicht erforderlich sind.

Es ist hierbei möglich, nach dem Aushärten Verbundspannungen von 5 bis 35 N/mm², eine Zugfestigkeit von 2 bis 30 MPa, beispielsweise von 5 bis 18 MPa, ein Zugmodul von 0,5 bis 5 GPa, beispielsweise von 1 bis 3 GPa, und eine Zugdehnung von 3 %, insbesondere von 2 % und besonders bevorzugt von 1,5 %oder weniger zu erhalten - Befestigungs-Kunstharze mit diesen Parametern bilden eine besondere Ausführungsform der Erfindung.

Bei den Siliconharzen können außer den hydrolysierbaren Gruppen vorzugsweise keine zur Polymerisation geeigneten Funktionalitäten vorliegen (wie ungesättigte Doppelbindungen, Epoxygruppen, Isocyanatgruppen oder dergleichen), doch sind diese möglich (insbesondere im Falle von Epoxygruppen), soweit die Befestigungskunstmörtel keine Härter für diese beinhalten (im Falle von Doppelbindungen z.B. Peroxide, im Falle von Epoxygruppen z.B. Polyamine, Polyaminole oder Polyole). Mit anderen Worten: Die Harze sind vorzugsweise derart ausgestaltet, dass außer der auf der Hydrolyse hydrolysierbarer Gruppen beruhenden Polymerisation zu Siloxanen keine weiteren Polymerisationsreaktionen stattfinden können.

Die Siliconharze, oder die Befestigungs-Kunstharze mit allen Bestandteilen, sind vorzugsweise frei von Silanterminierten Präpolymeren (STP), was insbesondere bedeutet, dass sie 5 oder weniger Gew.-%, vorzugsweise 2 oder 1 oder jeweils weniger Gew.-% und insbesondere 0 Gew-%.

Die Erfindung wie in den Ansprüchen, insbesondere in einem der Ansprüche definiert, betrifft die Verwendung eines vorstehend genannten oder nachstehend definierten mehr- oder (insbesondere) einkomponentigen Befestigungs-Kunstharzes zur Befestigung eines Verankerungselementes in einem Loch, insbesondere einem Bohrloch, in einem wasserhaltigen Bausubstrat, insbesondere Beton oder Ziegelstein, wie Hohlziegel. Hierbei werden mit bevorzugten Befestigungs-Kunstharzen nach dem Aushärten Verbundspannungen von 5 bis 35 N/mm², eine Zugfestigkeit von 2 bis 30 MPa, beispielsweise von 5 bis 18 MPa, ein Zugmodul von 0,5 bis 5 GPa, beispielsweise von 1 bis 3 GPa, und eine Zugdehnung von 3 %, insbesondere von 2 % und besonders bevorzugt von 1,5 % erhalten. Die Verwendung kann auch ohne Reinigung des (insbesondere Bohr-) Lochs erfolgen. Weiterhin ist es auch möglich, das Bohrloch unter Verwendung von Wasser zu erstellen oder mit Wasser zu reinigen.

Eine weitere Ausführungsform der Erfindung betrifft ein Verfahren zum Befestigen eines Verankerungselements ("Einmörteln") in einem Loch, insbesondere Bohrloch, in einem (insbesondere - vor allem im Falle des einkomponentigen Systems - wasserhaltigen) Bausubstrat, insbesondere Beton oder Ziegelstein, wie Hohlziegel, bei dem gleichzeitig oder nacheinander das Verankerungselement und ein vorstehend genanntes oder nachfolgend definiertes mehr- oder (insbesondere) einkomponentiges Befestigungs-Kunstharz, soweit unter einen der Ansprüche fallend, in das Loch eingebracht werden und das Befestigungs-Kunstharz aushärten gelassen wird. Das Verfahren kann auch ohne Reinigung des (insbesondere Bohr-)Lochs durchgeführt werden.

Bei der Befestigung in Hohlbaustoffen in den vorgenannten Verwendungen und Verfahren kann die Aushärtung auch (mindestens zusätzlich) durch Luftfeuchtigkeit oder insbesondere durch Feuchtigkeit, die in für Hohlbaustoffen üblichen Hilfsmitteln wie z.B. Siebhülsen enthalten ist, erfolgen. In einer besonderen Ausführungsform kann diese Siebhülse aus einem sehr hydrophilen wasserhaltigen Material (z.B. Polyamid) oder aus einem saugenden und vor Anwendung in Wasser zu tauchenden Material ausgeführt sein. In mehrkomponentigen Systemen kann die Aushärtung mit Hilfe einer wasserhaltigen Komponente erfolgen.

Eine weitere Ausführungsform der Offenbarung für Referenzzwecke betrifft eine Befestigungsanordnung, beinhaltend ein (insbesondere - vor allem im Falle des einkomponentigen Systems - wasserhaltiges) Bausubstrat, insbesondere Beton oder Ziegelstein, wie Hohlziegel, sowie, jeweils in das Loch eingebracht, ein Verankerungselement und ein wie vorstehend genanntes oder nachfolgend definiertes aushärtendes oder insbesondere ausgehärtetes Befestigungs-Kunstharz.

Die nachfolgenden Definitionen dienen der Beschreibung bevorzugter Bedeutungen allgemeiner vor- und nachstehend genannter Begriffe und können einzelne, mehrere oder alle breiteren Begriffe, die zur Beschreibung der Erfindungsgegenstände verwendet werden, ersetzen, was zu bevorzugten Ausführungsformen der Erfindung führt, die hier alle als offenbart gelten.

Vorzugsweise handelt es sich bei den erfindungsgemäß verwendeten Kunstharz-Befestigungssystemen um einkomponentige Systeme.

Bausubstrate sind insbesondere Beton oder Ziegelstein, vorzugsweise Hohlziegelstein oder insbesondere Beton.

Unter einem wasserhaltigen Bausubstrat ist insbesondere ein solches zu verstehen, das von sich aus reaktionsfähiges ("freies") Wasser beinhaltet, insbesondere im Bereich der Bohrlochwandungen, und/oder das Wasser wegen der Verwendung von Wasser bei der Erstellung des Bohrloches und/oder dessen Reinigung mit Wasser beinhaltet. Wasserhaltig bedeutet dabei vorzugsweise nicht, dass die entsprechenden Bausubstrate unter Wasser liegen und somit die Bohrlöcher mit Umgebungswasser gefüllt sind, doch können die Bausubstrate bzw. Lochwandungen feuchtigkeitsbenetzt sein oder das Wasser, z.B. durch Diffusion oder kapillare Kräfte oder dergleichen, aus dem Substratmaterial der Lochwandung zugänglich sein. Insbesondere im Falle der Verwendung von erfindungsgemäßen mehrkomponentigen Kunstharzen (mit wasserhaltiger Härterkomponente) können die Bausubstrate auch wasserarm oder wasserfrei sein.

Als - mindestens eine hydrolysierbare an Si gebundene Gruppe beinhaltendes - Silikonharz finden insbesondere entsprechende Silikonharze in Form von Phenyl- und/oder Methylsilikonharzen Verwendung, welche selbst insgesamt (= 100 Gew.-%) , 0 bis 65 Gew.-% Struktureinheiten mit phenylfunktionellen T-Einheiten, 0 bis 95 Gew.-% an methylfunktionellen T- und/oder D-, insbesondere T-Einheiten und 5 bis 40 Gew.-% hydrolysierbare, an Si gebundene Gruppen beinhalten, daneben noch Q- und M-Einheiten enthalten sein können, und außerdem vorzugsweise eine mittlere Molmasse von 400 bis 3500 Dalton, beispielsweise von 800 bis 1300 Dalton, aufweisen. Es wurde gefunden, dass, je höher der Anteil an methylfunktionellen T-Einheiten relativ zu den phenylfunktionellen Einheiten ist, desto bessere mechanische Eigenschaften erzielt werden können. Der Gehalt an D-Einheiten in diesen Silikonharzen liegt vorzugsweise unter 10 Gew.-%.

Als hydrolysierbare Gruppe(n) sind insbesondere an Si gebundene Methoxy, Ethoxy oder Propoxygruppen vorgesehen, vorzugsweise Methoxy.

Ein bevorzugtes Beispiel für derartige Verbindungen ist käuflich unter dem Namen SILRES^{®} IC 368 oder Silres MSE 100 von der Wacker Chemie AG, München, Deutschland, erhältlich. Weitere für ein mehr- oder (insbesondere) einkomponentiges erfindungsgemäß verwendbares Kunstharz-Befestigungssystem und Bestandteile sind aus DE 10 2011 081 264 ersichtlich, die hier als Referenz für das Wissen des Fachmanns zitiert wird.

Der Anteil dieser silan-haltigen Mischung (Silikonharz und gegebenenfalls mindestens ein niedermolekulares aktives Silan an der Gesamtmasse des mehr- oder einkomponentigen Kunstharz-Befestigungssystems) kann bei 0,1 bis 100, insbesondere von 5 bis 60, z.B. bei 10 bis 50 Gew.% liegen.

Das Silikonharz kann vorzugsweise mit einem Anteil von 0-50 % (gerechnet auf die Summe aus Silikonharz und niedermolekularem Silan) eines niedermolekularen aktiven Silans versetzt sein, insbesondere zwischen 0,2 und 5 %, besonders bevorzugt zwischen 0,5 und 2 %.

Vorzugsweise sind keine oder ferner nicht mehr als 9,5 % des Befestigungs-Kunstharzes organische silanterminierte Polymere.

Wo von "unsubstituiert oder substituiert" die Rede ist, können, falls Substituenten vorhanden sind, diese beispielsweise C₁-C₁₈-Alkyl-, wie Methyl oder Ethyl, Phenyl-, oder Halogen-, insbesondere Chlorsubstituenten, sein, beispielsweise 1 bis 3 unabhängig voneinander ausgewählte derartige Substituenten je damit substituiertem Rest.

Alkyl (auch in Alk(yl)oxy) steht innerhalb dieser Offenbarung stets für insbesondere einen unverzweigten oder ein- oder mehrfach verzweigten Alkylrest mit beispielsweise 1 bis 18, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl.

Unter einem Loch ist insbesondere ein Bohrloch zu verstehen. Dieses kann gereinigt (z.B. durch ein- oder mehrmaliges Ausblasen und/oder Bürsten) oder ungereinigt der erfindungsgemäßen Verwendung bzw. dem erfindungsgemäßen Verfahren zugeführt werden.

Unter Verankerungselementen sind insbesondere solche aus Metall, z.B. Hinterschneidanker, Gewindestangen, Schrauben, Bohranker, Bolzen, oder ferner einem anderen Material, wie Kunststoff oder Holz, zu verstehen.

Die Verbundspannungen werden folgendermaßen gemessen: Im Bausubstrat (vorzugsweise Beton, z.B. C20/C25) werden bei Raumtemperatur Bohrlöcher mit einem Durchmesser von 14 mm und einer Tiefe von 95 mm erstellt (Bohrlochreinigung: 2 x Ausblasen, 2 x Bürsten, 2 x Ausblasen). Die Bohrlöcher werden mit der erfindungsgemäßen ein- oder mehrkomponentigen Masse verfüllt und in die noch weiche Masse M12-Gewindestangen eingedreht. Nach der Aushärtezeit (die bis zur vollen Aushärtung z.B. 3 bis 10 Tage betragen kann) wird die Befestigung einem Adhäsionsversagenstest unterzogen.

Die Zugfestigkeit, der Zugmodul und die Zugdehnung werden bestimmt an Schulterstäben des Probekörpertyps 1 BA (Gesamtlänge 75,6 mm, Länge I des parallelen Teils von 39 mm, Einspannlänge 58 mm, Zuggeschwindigkeit 5 mm/min) gemäß DIN EN ISO 527.

Neben dem Siikonharzbestandteil kann ein erfindungsgemäß verwendbares mehr- oder insbesondere einkomponentiges Befestigungs-Kunstharz vorteilhaft auch weitere niedermolekulare aktive Silane beinhalten, nämlich weitere Silane, die ein oder mehrere hydrolysierbare Gruppen, wie Alkoxy-, z.B. Methoxy- oder Ethoxy-, am Siliciumatom gebunden enthalten, mit Molekulargewichten von 1000 Da oder weniger, z.B. 800 Da oder weniger, insbesondere von 400 Da oder weniger. Die weiteren Silane sind ausgewählt aus der Gruppe, welche 3-Aminopropyltrialkoxysilane, wie 3-Aminopropyl-trimethoxysilan oder 3-Aminopropyl-triethoxysilan, N-(2-Aminoethyl)-3-aminopropyl-trimethoxysilan, ferner 3-Glycidyloxypropyltrialkoxysilane , wie 3-Glycidyloxypropyltrimethoxysilan oder -ethoxysilan, 3-Glycidyloxypropylmethyldi-methoxysilan, ferner Bis-(3-trialkoxysilylpropyl)amin, wie Bis-(3-trimethoxysilylpropyl)amin oder Bis-(3-triethoxysilylpropyl)amin, 3-Mercaptopropyltrialkoxysilan, wie 3-Mercaptopropyltrimethoxysilan, und 3-(Meth)acryloyl-oxypropyl-trialkoxysilanen, wie 3-(Meth)acryloyl-oxypropyltrimethoxysilan oder -triethoxysilan 3-(Meth)-acryloyl-oxypropylmethyldimethoxysilan oder Alkenylalkoxysilane, wie Vinylalkoxysilane, z.B. Vinyltrimethoxysilan oder Vinyltriethoxysilan, und/ oder ferner in allen Ausführungsformen Tetraalkoxysilan, wie Tetraethoxysilan, Tetramethoxysilan oder Tetrapropoxysilan oder Alkoxypolysilikat (Ester der (Poly)kieselsäure), wie Ethyl- oder Propylpolysilikat; besonders bevorzugt auch alpha-Silane wie N-Phenylaminomethylmethyldimethoxysilan, Phenylaminomethyl-trimethoxysilan, N-Cyclohexylamino-methyl-methyldiethoxysilan, N-Cyclohexylaminomethyl-trimethoxysilan, N-Cyclohexylaminomethyl-triethoxysilan, (Meth)-acryloyloxymethyltrimethoxysilan, (Meth)acryloyl-oxymethyl-methyldimethoxysilan oder (Meth)acryloyl-oxymethyl-methyldiethoxysilan, N-Trimethoxysilylmethyl-O-methylcarbamat oder N-Dimethoxy(methyl)silylmethyl-O-methylcarbamat, oder Gemische von zwei oder mehr davon, umfasst. Der Anteil dieser Verbindung(en) bzw. der weiteren Silane an der Gesamtmasse des einkomponentigen Kunstharz-Befestigungssystems kann bei 0,01 bis 30, z.B. bei 0,1 bis 8 Gew.% liegen.

Besonders bevorzugt sind 3-Aminopropyl-tri(m)ethoxysilan, N-(2-Aminoethyl)-3-aminopropyl-tri(m)ethoxysilan, Vinyltri(m)ethoxysilan, N-Phenylaminomethyltrimethoxysilan, (Meth)acryl-oyloxymethyltrimethoxysilan, (Meth)acryloyl-oxymethyl-methyldimethoxysilan N-Trimethoxysilylmethyl-O-methylcarbamat oder N-Dimethoxy(methyl)silylmethyl-O-methylcarbamat,

Das oder die weiteren niedermolekularen aktiven Silane können einen aktivierenden Effekt (wodurch für sie der Begriff Aktivator verwendet werden kann) auf die Aushärtung des erfindungsgemäß verwendeten mehr- oder insbesondere einkomponentigen Befestigungs-Kunstharzes ausüben.

"Beinhalten(d)" oder "umfassen(d)" bedeutet, dass neben den genannten Bestandteilen oder Komponenten oder Merkmalen noch andere vorhanden sein können, steht also für eine nicht abschließende Aufzählung, im Gegensatz zu "enthaltend nur", das eine abschließende Aufzählung der bei seiner Verwendung aufgezählten Bestandteilen oder Komponenten oder Merkmale bedeutet. "Auf Basis von" bedeutet ebenfalls "beinhaltend". "Beinhaltend" oder "umfassend" kann in besonderen Ausführungsformen durch "enthaltend nur" ersetzt werden.

Wo das Attribut "ferner" erwähnt wird, bedeutet dies, dass Merkmale ohne dieses Attribut stärker bevorzugt sein können.

"Herstellbar" (= erhältlich) bedeutet vorzugsweise "hergestellt" oder "erhalten", ferner jedoch auf andere Weise hergestellt/erhalten als direkt beschrieben.

"Und/oder" bedeutet, dass die genannten Merkmale/Substanzen jeweils alleine oder in Kombination von zwei oder mehr der jeweils genannten Merkmale/Substanzen vorliegen können.

Daneben können ein oder mehrere weitere übliche Zusätze, beispielsweise ausgewählt aus Füllstoffen (Zuschlagsstoffe) (bevorzugt), Katalysatoren, Haftvermittlern, Wasserfängern und Additiven beinhaltet sein.

"Etwa" bedeutet insbesondere, dass ein damit gekennzeichneter Zahlenwert um ± 10 %, vorzugsweise um ± 5 %, vom genannten Wert abweichen kann, beispielsweise um ± 2 %.

Als Füllstoffe finden beispielsweise übliche Füllstoffe, insbesondere Zemente (z.B. Portlandzemente oder Tonerdeschmelzzemente), Kreiden, Sand, Quarzsand (bevorzugt), Quarzmehl (bevorzugt), Korund oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon. In einer besonderen Ausführungsform der Erfindungsgegenstände sind die Füllstoffe aminosilanisiert. Es wird eine besonderer Effekt durch aminosilanbehandelte Füllstoffe wie aminosilanbehandeltes Quarzmehl (z.B Silbond AST^{®} der Fa. Quarzwerke GmbH), aminosilanbehandelte Kieselerde (z.B. Aktisil AM^{®} von Hoffmann Mineral), oder aminosilan-behandelte pyrogene Kieselsäuren erzielt, da durch diese aminosilanbehandelten Füllstoffe eine gleichmäßige Aktivierung und Beschleunigung der Aushärtung erreicht werden kann. Ferner sind auch mit anderen Silanen (ohne Aminogruppen) silanisierte Füllstoffe einsetzbar.

Der Anteil an Füllstoffen beträgt vorzugsweise 0 bis 90 Gew.-%, beispielsweise 10 bis 90 Gew.-%, jeweils an der Gesamtmasse des einkomponentigen Befestigungs-Kunstharzes. Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Als Katalysatoren können, falls überhaupt erforderlich bzw. erwünscht, organische LewisSäuren wie Titan-, Bismut, Zirkon und Zinnverbindungen, oder metallfreie Katalysatoren, Amine wie z.B. primäre (z.B. AMMO) oder tertiäre Amine (z.B. DBU = 1,8-Diazabicyclo-5,4,0-undecen-7) oder andere basische Verbindungen wie Metalloxide und -hydroxide (z.B. CaO, Ca(OH)₂, KOH, NaOH, LiOH, Al(OH)₄⁻, Silikate), oder saure Verbindungen, wie anorganische oder organische Säuren, Verwendung finden. Der Anteil kann bei 0 bis 10 Gew.-%, z.B. 0,05 bis 5 Gew.-%, insbesondere zwischen 0,1 und 3 % jeweils bezogen auf die Gesamtmasse an Kunstharz, liegen.

Als Wasserfänger können Silane mit hydrolysierbaren Gruppen oder Orthoester verwendet werden, die in einem Anteil von 0 bis 10 Gew.-%, z.B. 0,05 bis 5 Gew.-%, bezogen auf die Gesamtmasse des Befestigungs-Kunstharzes, zugesetzt sein können.

Weitere Additive können zugesetzt sein, wie Farbstoffe, Pigmente, Antioxidantien, UV-Stabilisatoren, Weichmacher, Rheologieadditive, Flammschutzmittel oder Fungizide, oder zwei oder mehr davon. Sie können in einem Anteil von beispielsweise 0 bis 20 Gew.-%, z.B. 0,1 bis 20 Gew.-%, bezogen auf die Gesamtmasse des Kunstharzes, zugesetzt sein.

Für all diese Zusätze finden sich Beispiele in DE 10 2011 081 264 A1, auf die hier für Referenzzwecke verwiesen wird.

Vorzugsweise sind die erfindungsgemäß verwendbaren Kunstharz-Befestigungssysteme frei von Weichmachern, d.h. sie enthalten z.B. 5 oder weniger Gew.-%, insbesondere 2 - oder 1 weniger Gew.-%. Vorzugsweise 0 Gew.-% an Weichmachern.

Die erfindungsgemäß verwendeten einkomponentigen Befestigungs-Kunstharze können in üblichen Behältnissen, wie Eimern, Tuben, Kartuschen, Folienbeuteln, Töpfchen oder dergleichen, wasserdicht gelagert und aus diesen heraus verwendet werden.

Erfindungsgemäß verwendete mehr-, wie zweikomponentige Befestigungs-Kunstharze können vorzugsweise als Zwei- oder Mehr-Komponentensysteme (Mehrkomponentenkit) vorgesehen sein und verwendet werden. Zweikomponentige Systeme sind auch solche, die eine Komponente z.B. in verkapselter Form in der anderen Komponente beinhalten.

Unter einem Mehrkomponentenkit ist insbesondere ein Zweikomponentenkit mit einer Komponente (A), welche ein oder mehrere - mindestens eine hydrolysierbare an Si gebundene Gruppe beinhaltenden Silikonharze, insbesondere der Formel I wie oben definiert oder in den Beispielen genannt, und Härter (Komponente (B), der wasserhaltig ist, wobei weitere Zusätze in einer oder beider der Komponenten vorgesehen sein können, zu verstehen, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B)

(und gegebenenfalls weitere Komponenten) zur Befestigung an der gewünschten Stelle, beispielsweise direkt vor oder in einem Loch, so zu vermischen und erforderlichenfalls einzubringen, dass dort die Härtungsreaktion stattfinden kann. Sehr geeignet sind Patronen (die besonders bevorzugt sind), beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Befestigungs-Kunstharzes mit oben und nachstehend genannten Zusammensetzungen zur Aufbewahrung vor der Nutzung enthalten sind, wobei vorzugsweise auch ein Statikmischer zum entsprechenden Kit gehört.

Die Verwendung eines erfindungsgemäß verwendeten Befestigungs-Kunstharzes am gewünschten Einsatzort erfolgt durch Mischen der zugehörigen Komponenten, insbesondere nahe bei oder direkt vor einem Loch oder (beispielsweise insbesondere bei Verwendung von Statikmischern oder beim Zerschlagen entsprechender Patronen) innerhalb eines Loches oder Spaltes, z.B. einem Bohrloch.

Unter Einmörteln ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner einem anderen Material, wie Kunststoff oder Holz, in festen Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassaden oder andere Bauelemente befestigt werden.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, insbesondere Löcher, wie Bohrlöcher, beginnen mehrere, im Wesentlichen parallel und/oder nur mit geringer zeitlicher Versetzung ablaufende Reaktionen, insbesondere die Kettenpolymerisation. Die endgültige Aushärtung erfolgt in situ.

Als wasserhaltige (wässrige) Komponente kommt ein wasserbasierter (oder wässriger) Härter in Betracht, der Wasser beinhaltet - daneben können nicht mit Wasser reaktive weitere Zusätze beinhaltet sein, wie oben oder nachfolgend definiert. Bevorzugt als wasserbasierten Härter (der durch Hydrolyse der hydrolysierbaren an Si gebundenen Gruppen in Komponente (A) für Vernetzung sorgt) ist eine wasserhaltige Masse, beispielsweise Wasser als solches oder Wasser in Gel- oder Pastenform, beispielsweise in einer möglichen bevorzugten Ausführungsform Wasser; oder aus Wasser (beispielsweise, bezogen auf Komponente (B), in einem Anteil von 0,1 bis 99,9 Gew.-%, wie insbesondere von 1 bis 80 Gew.-%; und daneben ein oder mehreren Verdickungsmitteln, wie wasserlöslichen und/ oder wasserquellbaren Polymeren oder organischen Verdickungsmitteln, z.B. Agar, Carrageen, Tragant, Gummi arabicum, Pektine, Alginate, Polyosen, Guar-Mehl, Johannismehl, Stärke, Dextrine, Gelatine, Casein, Carboxymethylcellulose, Hydoxyethylcellulose, Hydroxypropylcellulose, anderen Celluloseethern, Poly(meth)acrylsäurederivaten, Polyvinylethern, Polyvinylalkohol, Polyamiden, Polyiminen, gefällten Polykieselsäuren, hochdispersen pyrogenen Kieselsäuren, Tonmineralien wie Montmorillonit oder dergleichen. Die Gewichtsanteile der Verdickungsmittel können beispielsweise 0,1 bis 20 Gew.-% betragen, bezogen auf das Gesamtgewicht von Komponente (B).

Weitere vorteilhafte Ausführungsformen der Erfindung finden sich in den Ansprüchen, vorzugsweise den abhängigen Ansprüchen, die hier als in die Beschreibung durch Bezugnahme inkorporiert anzusehen sind.

### Beispiele:

Die nachfolgenden Beispiele dienen der Illustration der Erfindung, ohne ihren Umfang einzuschränken.

### Es wurden Harze mit den nachfolgend genannten Zusammensetzungen hergestellt und ihre Verbundspannungen wie im allgemeinen Teil beschrieben ermittelt:

Silres IC-368 und MSE 100: Siehe oben.
DBU: 1,8-Diazabicyclo-5,4,0-undecen-7.

| | | | |
|---|---|---|---|
| Einkomponentiqe Kunstharze | | | |
| | | | |
| Beispiel 1: | | | |
| | | | |

| **Rohstoff** | **Gehalt [%]** | | |
|---|---|---|---|
| Silres IC-368 | 39,6 | | |
| Aminopropyltrimethoxysilan | 0,5 | | |
| DBU | 0,8 | | |
| Quarzmehl 5 µm | 59,1 | | |
| | | | |
| Loch M14, Ankerstanqe M12 nach 5 d Aushärtezeit | | | 19,4 N/mm² |
| | | | |
| | | | |
| | | | |
| Beispiel 2: | | | |
| | | | |

| **Rohstoff** | **Gehalt [%]** | | |
|---|---|---|---|
| Silres IC-368 | 39,6 | | |
| Vinyltrimethoxysilan | 0,5 | | |
| DBU | 0,8 | | |
| Quarzmehl 5 um | 59.1 | | |
| | | | |
| Loch M14, Ankerstanqe M12 nach 5 d Aushärtezeit | | | 17,7 N/mm² |
| | | | |
| | | | |
| Beispiel 3: | | | |
| | | | |

| **Rohstoff** | **Gehalt [%]** | | |
|---|---|---|---|
| Silres IC-368 | 39,6 | | |
| Dimethoxy(methyl[N-phenylaminomethyl]silan | 0,5 | | |
| DBU | 0,8 | | |
| Quarzmehl 5 µm | 59,1 | | |
| | | | |
| Loch M14, Ankerstange M12 nach 5 d Aushärtezeit | | | 18,1 N/mm² |
| | | | |
| | | | |
| | | | |
| Zweikomponentige Kunstharze | | | |
| | | | |
| | | | |
| Beispiel 4: | | | |
| | | | |
| Komponente 1: | | | |

| **Rohstoff** | **Gehalt [%]** | | |
|---|---|---|---|
| Silres IC-368 | 39,6 | | |
| Aminopropyltrimethoxysilan | 0,5 | | |
| DBU | 0,2 | | |
| Quarzmehl 5 µm | 59,7 | | |
| | | | |
| 50 g der Komponente 1 werden mit 0,72 g Wasser vermischt und gehärtet. | | | |
| | | | |
| Loch M14, Ankerstange M12 nach 4 d Aushärtezeit | | | 15,1 N/mm² |
| | | | |
| | | | |
| Beispiel 5: | | | |
| | | | |
| Komponente 1: | | | |

| **Rohstoff** | **Gehalt [%]** | | |
|---|---|---|---|
| Silres IC-368 | 29,6 | | |
| Silres MSE 100 | 10 | | |
| DBU | 0,2 | | |
| Quarzmehl 5 µm | 60,2 | | |
| | | | |
| 50 g der Komponente 1 werden mit 0,86 g Wasser vermischt und gehärtet. | | | |
| | | | |
| Loch M14, Ankerstange M12 nach 4 d Aushärtezeit | | | 15.8 N/mm² |
| | | | |

### Beispiel 2: Vergleich mit bekannten einkomponentigen Systemen

Nach dem im allgemeinen Teil beschriebenen Verfahren wurden die Verbundspannungen für auf dem Markt erhältliche einkomponentige Kunstharze ermittelt.

Unter diesen Bedingungen wurden folgende Messergebnisse erhalten:

| Aushärtezeit [d] | Verbundspannung (N/mm²) | |
|---|---|---|
| | Fix all High Tack (Einkomponenten-Klebstoff der Soudal Deutschland, Leverkusen, Deutschland) (Hybridpolymerbasiert) | Konstruktionsklebstoff KK(1-KomponentenKlebstoff der fischerwerke, Waldachtal, Deutschland) (Polyurethanbasiert) |
| 1 | Kein Verbund | Kein Verbund |
| 2 | | |
| 3 | | |
| 7 | 1,0 | 3,7 |
| 28 | | |

| | | |
|---|---|---|
| d = Tage | | |

Zur mechanischen Charakterisierung wurden die Zugfestigkeit σ B, das Zugmodul E und die Zugdehnung bestimmt wie im allgemeinen Teil beschrieben:
Unter diesen Bedingungen wurden folgende Messergebnisse erhalten:

| System | Zugfestigkeit σ B [MPa] | Zugmodul E [GPa] | Zugdehnung [%] |
|---|---|---|---|
| Fix all High Tack | 3,7 | 0,03 | 69,8 |
| Konstruktionsklebstoff KK | 7,5 | 0,6 | 4,2 |

Die Messergebnisse zeigen, dass ein erfindungsgemäßes einkomponentiges oder zweikomponentiges Befestigungs-Kunstharz für die Anwendung zur Befestigung von Verankerungselementen in Bohrlöchern gegenüber - bereits für ihre sonstigen Zwecke sehr guten - kommerziellen Einkomponentenklebern deutlich verbesserte bzw. gegenüber anderen zweikomponentigen Systemen vergleichbare Eigenschaften zeigt.

## Patentansprüche

1. Verwendung eines Befestigungs-Kunstharzes zur Befestigung eines Verankerungselementes in einem Loch in einem Bausubstrat, wobei es sich bei dem Befestigungs-Kunstharz um ein ein- oder mehrkomponentiges Befestigungs-Kunstharz auf Basis von einem mindestens eine hydrolysierbare an Si gebundene Gruppe beinhaltenden Silikonharz, mit oder ohne mindestens einem niedermolekularen aktiven Silan, das ein oder mehrere hydrolysierbare Gruppen enthält und ein Molekulargewicht von 1000 Da oder weniger hat, handelt.

2. Verwendung nach Anspruch 1, wobei es sich bei dem Silikonharz um eines handelt, das Einheiten der Formel (I) umfasst
R1ₐ(R²O)_{b}R3_{c}SiO_{(4-a-b-c)/2} (I)
worin
R¹ gleich oder verschieden sein kann und Wasserstoff, ein einwertiger SiC-gebundener C₁-C₁₈-Alkylrest, der unsubstituiert oder subsituiert sein kann, oder ein zweiwertiger C₁-C₁₈-Alkylrest, der ebenfalls unsubstituiert oder substituiert sein kann, der zwei Einheiten der Formel (I) verbrückt, ist;
R² gleich oder verschieden sein kann und Wasserstoff oder einen einwertigen C₁-C₁₈-Alkylrest, der unsubstituiert oder substituiert sein kann, bedeutet,
R³ gleich oder verschieden sein kann und einen einwertigen, SiC-gebundenen aromatischen Kohlenwasserstoffrest, insbesondere Phenylrest, bedeutet, der jeweils unsubstituiert oder substituiert sein kann,
a gleich 0, 1, 2 oder 3 ist,
b gleich 0, 1, 2 oder 3, vorzugsweise 0, 1 oder 2, besonders bevorzugt 0 oder 1 ist, und
c gleich 0, 1 oder 2, vorzugsweise 0 oder 1 ist,
mit der Maßgabe, dass die Summe aus a + b + c kleiner oder gleich 3 ist und vorzugsweise in mindestens 40 der Einheiten der Formel (I) die Summe aus b + c gleich 0 oder 1 ist;

3. Verwendung nach Anspruch 1 oder 2, worin als niedermolekulares aktives Silan mindestens eines ausgewählt aus der Gruppe, welche 3-Aminopropyltrialkoxysilane, 3-Glycidyloxypropyltrialkoxysilane , Bis-(3-trialkoxysilylpropyl)amin, 3-Mercaptopropyltrialkoxysilan, 3-(Meth)acryloyl-oxypropyltrialkoxysilane Alkenylalkoxysilane, und/ oder in allen Ausführungsformen Tetraalkoxysilan oder Alkoxypolysilikat, und alpha-Silane, oder Gemische von zwei oder mehr davon, umfasst, beinhaltet ist.

4. Verwendung nach Anspruch 3, worin als niedermolekulares aktives Silan mindestens eines ausgewählt aus der Gruppe, welche 3-Aminopropyl-trimethoxysilan, 3-Aminopropyltriethoxysilan, N-(2-Aminoethyl)-3-aminopropyl-trimethoxysilan, 3-Glycidyloxypropyltrimethoxysilan oder -ethoxysilan, 3-Glycidyloxypropylmethyldi-methoxysilan, Bis-(3-trimethoxy-silylpropyl)amin, Bis-(3-triethoxysilylpropyl)amin, 3-Mercaptopropyltrimethoxysilan, 3-(Meth)-acryloyl-oxypropyltrimethoxysilan oder -triethoxysilan, 3-(Meth)acryloyl-oxypropylmethyldimethoxysilan, Vinyltrimethoxysilan, Vinyltriethoxysilan, und/ oder Tetraethoxysilan, Tetramethoxysilan, Tetrapropoxysilan, Ethyl- oder Propylpolysilikat, N-Phenylaminomethylmethyldimethoxysilan, Phenylaminomethyl-trimethoxysilan, N-Cyclohexylamino-methyl-methyldiethoxysilan, N-Cyclohexylaminomethyl-trimethoxysilan, N-Cyclohexylaminomethyl-triethoxysilan, (Meth)acryloyloxymethyltrimethoxysilan, (Meth)acryloyl-oxymethyl-methyldimethoxysilan, (Meth)acryloyl-oxymethyl-methyldiethoxysilan, N-Trimethoxysilylmethyl-O-methylcarbamat und N-Dimethoxy(methyl)silylmethyl-O-methylcarbamat, oder Gemische von zwei oder mehr davon, umfasst, beinhaltet ist.

5. Verwendung nach einem der Ansprüche 1 bis 4, **dadurch gekennzeichnet, dass** der Anteil an der Gesamtmasse an Silikonharz und gegebenenfalls mindestens einem niedermolekularen Silan bei an der Gesamtmasse des mehr- oder einkomponentigen Kunstharz-Befestigungssystems bei 0,1 bis 100 liegt und/oder das Silikonharz, bezogen auf die Masse von Silikonharz und mindestens einem niedermolekularem aktiven Silan zusammen, gegebenenfalls mit 0,2 bis 5 Gew.-% des niedermolekularen Silans versetzt ist.

6. Verwendung nach einem der Ansprüche 1 bis 4, **dadurch gekennzeichnet, dass** der Anteil an der Gesamtmasse an Silikonharz und gegebenenfalls mindestens einem niedermolekularen Silan bei an der Gesamtmasse des mehr- oder einkomponentigen Kunstharz-Befestigungssystems bei 10 bis 50 Gew.% liegt und/oder das Silikonharz , bezogen auf die Masse von Silikonharz und mindestens einem niedermolekularem aktiven Silan zusammen, gegebenenfalls mit 0,5 bis 2 Gew.-% des niedermolekularen Silans versetzt ist.

7. Verwendung nach einem der Ansprüche 1 bis 6, **dadurch gekennzeichnet, dass** es einen oder mehrere weitere übliche Zusätze beinhaltet.

8. Verwendung des Befestigungs-Kunstharzes nach einem der Ansprüche 1 bis 7 in Form eines Mehr-komponenten-Befestigungs-Kunstharzes.

9. Verwendung des Befestigungs-Kunstharzes nach einem der Ansprüche 1 bis 7 in Form eines Zweikomponenten-Befestigungs-Kunstharzes.

10. Verwendung eines Befestigungs-Kunstharzes nach einem der Ansprüche 1 bis 9 in Form eines Einkomponenten-Befestigungs-Kunstharzes.

11. Verwendung eines Befestigungs-Kunstharzes nach einem der Ansprüche 1 bis 10 zur Befestigung eines Verankerungselementes in einem Bohrloch in einem Bausubstrat.

12. Verwendung nach Anspruch 11 eines einkomponentigen Befestigungs-Kunstharzes, wobei es sich bei dem Bausubstrat um ein wasserhaltiges Bausubstrat handelt.

13. Verwendung nach Anspruch 11 eines einkomponentigen Befestigungs-Kunstharzes, wobei es sich bei dem Bausubstrat um ein wasserhaltiges Bausubstrat aus Ziegelstein oder aus Beton handelt.

14. Verfahren zum Befestigen eines Verankerungselements in einem Loch in einem Bausubstrat mit wasserhaltiger Lochwandung, wobei gleichzeitig oder nacheinander das Verankerungselement und ein Befestigungs-Kunstharz wie in einem der Ansprüche 1 bis 10 definiert in das Loch eingebracht werden und das Befestigungs-Kunstharz aushärten gelassen wird.

15. Verfahren nach Anspruch 14, wobei es sich bei dem Bausubstrat um eines aus Ziegelstein oder aus Beton handelt.

## Claims

1. Use of a synthetic fixing resin for fixing an anchoring element in a hole in a building substrate, wherein the synthetic fixing resin is a single-component or multi-component synthetic fixing resin based on a silicone resin containing at least one hydrolysable group bonded to Si, with or without at least one low-molecular-weight active silane which contains one or more hydrolysable groups and has a molecular weight of 1000 Da or less.

2. Use according to claim 1, wherein the silicone resin is one which comprises units of the formula (I)
R1ₐ(R²O)_{b}R³_{c}SiO_{(4-a-b-c)/2} (I)
wherein
R¹ can be identical or different and is hydrogen, a monovalent, SiC-bonded C₁-C₁₈alkyl radical, which can be unsubstituted or substituted, or a divalent C₁-C₁₈alkyl radical, which can likewise be unsubstituted or substituted, which bridges two units of the formula (I);
R² can be identical or different and denotes hydrogen or a monovalent C₁-C₁₈alkyl radical, which can be unsubstituted or substituted,
R³ can be identical or different and denotes a monovalent, SiC-bonded aromatic hydrocarbon radical, especially a phenyl radical, which can in each case be unsubstituted or substituted,
a is 0, 1, 2 or 3,
b is 0, 1, 2 or 3, preferably 0, 1 or 2, especially preferably 0 or 1, and
c is 0, 1 or 2, preferably 0 or 1,
with the proviso that the sum of a + b + c is less than or equal to 3 and preferably in at least 40 of the units of the formula (I) the sum of b + c is 0 or 1.

3. Use according to claim 1 or 2, wherein as low-molecular-weight active silane there is present at least one selected from the group comprising 3-amino-propyltrialkoxysilanes, 3-glycidyloxypropyltrialkoxysilanes, bis-(3-trialkoxysilylpropyl)-amine, 3-mercaptopropyltrialkoxysilane, 3-(meth)acryloyloxypropyltrialkoxysilanes, alkenylalkoxysilanes, and/or in all embodiments tetraalkoxysilane or alkoxypolysilicate, and alpha-silanes, or mixtures of two or more thereof.

4. Use according to claim 3, wherein as low-molecular-weight active silane there is present at least one selected from the group comprising 3-aminopropyl-trimethoxysilane, 3-aminopropyl-triethoxysilane, N-(2-aminoethyl)-3-aminopropyl-trimethoxysilane, 3-glycidyloxypropyltrimethoxysilane or -ethoxysilane, 3-glycidyloxypropyl-methyldi-methoxysilane, bis-(3-trimethoxysilylpropyl)amine, bis-(3-triethoxysilylpropyl)-amine, 3-mercaptopropyltrimethoxysilane, 3-(meth)acryloyl-oxypropyl-trimethoxysilane or -triethoxysilane, 3-(meth)acryloyl-oxypropylmethyldimethoxysilane, vinyltrimethoxysilane, vinyltriethoxysilane, and/or tetraethoxysilane, tetramethoxysilane, tetrapropoxysilane, ethyl- or propyl-polysilicate, N-phenylaminomethylmethyldimethoxysilane, phenylaminomethyl-trimethoxysilane, N-cyclohexylamino-methyl-methyldiethoxysilane, N-cyclohexylaminomethyl-trimethoxysilane, N-cyclohexylaminomethyltriethoxysilane, (meth)acryloyloxymethyltrimethoxysilane, (meth)acryloyl-oxymethyl-methyldimethoxy-silane, (meth)acryloyl-oxymethyl-methyldiethoxysilane, N-trimethoxysilyl-methyl-O-methylcarbamate and N-dimethoxy(methyl)silylmethyl-O-methylcarbamate, or mixtures of two or more thereof.

5. Use according to any one of claims 1 to 4, **characterised in that** the proportion in the total composition of silicone resin and optionally at least one low-molecular-weight silane in the total composition of the multi-component or single-component synthetic resin fixing system is from 0.1 to 100 % by weight, and/or optionally from 0.2 to 5 % by weight of the low-molecular-weight silane has been added to the silicone resin, based on the mass of silicone resin and at least one low-molecular-weight active silane together.

6. Use according to any one of claims 1 to 4, **characterised in that** the proportion in the total composition of silicone resin and optionally at least one low-molecular-weight silane in the total composition of the multi-component or single-component synthetic resin fixing system is from 10 to 50 % by weight, and/or optionally from 0.5 to 2 % by weight of the low-molecular-weight silane has been added to the silicone resin, based on the mass of silicone resin and at least one low-molecular-weight active silane together.

7. Use according to any one of claims 1 to 6, **characterised in that** it includes one or more further customary additives.

8. Use of the synthetic fixing resin according to any one of claims 1 to 7 in the form of a multi-component synthetic fixing resin.

9. Use of the synthetic fixing resin according to any one of claims 1 to 7 in the form of a two-component synthetic fixing resin.

10. Use of a synthetic fixing resin according to any one of claims 1 to 9 in the form of a single-component synthetic fixing resin.

11. Use of a synthetic fixing resin according to any one of claims 1 to 10 for fixing an anchoring element in a drilled hole in a building substrate.

12. Use according to claim 11 of a single-component synthetic fixing resin, wherein the building substrate is a water-containing building substrate.

13. Use according to claim 11 of a single-component synthetic fixing resin, wherein the building substrate is a water-containing building substrate made of brick or of concrete.

14. Method for fixing an anchoring element in a hole in a building substrate with a water-containing hole wall, wherein the anchoring element and a synthetic fixing resin as defined in any one of claims 1 to 10 are introduced into the hole simultaneously or one after the other and the synthetic fixing resin is allowed to cure.

15. Method according to claim 14, wherein the building substrate is one made of brick or of concrete.

## Revendications

1. Utilisation d'une résine synthétique de fixation pour la fixation d'un élément d'ancrage dans un trou aménagé dans un substrat de construction, la résine synthétique de fixation étant une résine synthétique de fixation mono- ou multicomposants à base d'une résine de silicone contenant au moins un groupe hydrolysable lié à Si, avec ou sans au moins un silane actif à faible masse moléculaire, qui contient un ou plusieurs groupes hydrolysables et a une masse moléculaire de 1 000 Da ou moins.

2. Utilisation selon la revendication 1, dans laquelle la résine de silicone est une telle résine qui comprend des motifs de formule (I)
R¹ₐ(R²O)_{b}R³_{c}SiO_{(4-a-b-c)/2} (I)
dans laquelle
R¹ peut être identique ou différent et représente un hydrogène, un radical alkyle monovalent en C₁-C₁₈ lié à SiC, qui peut être substitué ou non substitué, ou un radical alkyle divalent en C₁-C₁₈, qui lui aussi peut être substitué ou non substitué, qui recouvre deux motifs de formule (I) ;
R² peut être identique ou différent et représente un hydrogène ou un radical alkyle monovalent en C₁-C₁₈, qui peut être substitué ou non substitué,
R³ peut être identique ou différent et représente un radical hydrocarboné aromatique monovalent lié à Si, en particulier un radical phényle, dont chacun peut être substitué ou non substitué,
a représente 0, 1, 2 ou 3,
b représente 0, 1, 2 ou 3, de préférence 0, 1 ou 2, d'une manière particulièrement préférée 0 ou 1, et
c représente 0, 1 ou 2, de préférence 0 ou 1,
à la condition que la somme a + b + c soit inférieure ou égale à 3 et que, de préférence, dans au moins 40 des motifs de formule (I) la somme b + c soit égale à 0 ou 1.

3. Utilisation selon la revendication 1 ou 2, pour laquelle le silane actif à faible masse moléculaire présent est au moins un tel silane choisi dans le groupe qui comprend des 3-aminopropyltrialcoxysilanes, des 3-glycidyloxypropyltrialcoxysilanes, une bis-(3-trialcoxysilylpropyl)amine, un 3-mercaptopropyltrialcoxysilane, des 3-(méth)acryloyloxypropyltrialcoxysilane, des alcénylalcoxysilanes et/ou, dans tous les modes de réalisation, un tétraalcoxysilane ou un alcoxypolysilicate, et des alpha-silanes, ou des mélanges de deux ou plusieurs d'entre eux.

4. Utilisation selon la revendication 3, dans laquelle le silane actif à faible masse moléculaire présent est au moins un tel silane choisi dans le groupe qui comprend le 3-aminopropyl-triméthoxysilane, le 3-aminopropyl-triéthoxysilane, le N-(2-aminoéthyl)-3-aminopropyl-triméthoxysilane, le 3-glycidyloxypropyltriméthoxysilane ou -éthoxysilane, le 3-glycidyloxypropylméthyldiméthoxysilane, la bis-(3-triméthoxysilylpropyl)aminé, la bis-(3-triéthoxysilylpropyl)aminé, le 3-mercaptopropyltriméthoxysilane, le 3-(méth)-acryloyloxypropyltriméthoxysilane ou -triéthoxysilane, le 3-(méth)acryloyl-oxypropylméthyldiméthoxysilane, le vinyltriméthoxysilane, le vinyltriéthoxysilane et/ou le tétraéthoxysilane, le tétraméthoxysilane, le tétrapropoxysilane, le polysilicate d'éthyle ou de propyle, le N-phénylaminométhylméthyldiméthoxysilane, le phénylaminométhyl-triméthoxysilane, le N-cyclohexylamino-méthyl-méthyldiéthoxysilane, le N-cyclohexylaminométhyl-triméthoxysilane, le N-cyclohexylaminométhyl-triéthoxysilane, le (méth)acryloyloxyméthyltriméthoxysilane, le (méth)acryloyl-oxyméthyl-méthyldiméthoxysilane, le (méth)acryloyl-oxyméthyl-méthyldiéthoxysilane, l'O-méthylcarbamate de N-triméthoxysilylméthyle et l'O-méthylcarbamate de N-diméthoxy(méthyl)silylméthyle, ou les mélanges de deux ou plusieurs d'entre eux.

5. Utilisation selon l'une des revendications 1 à 4, **caractérisée en ce que** la proportion de la masse totale de la résine de silicone et éventuellement d'au moins un silane à faible masse moléculaire, par rapport à la masse totale du système de fixation par résine synthétique multi- ou monocomposant, est de 0,1 à 100 et/ou que la résine de silicone, par rapport à la masse combinée de la résine de silicone et d'au moins une résine active à faible masse moléculaire, est additionnée de 0,2 à 5 % en poids du silane à faible masse moléculaire.

6. Utilisation selon l'une des revendications 1 à 4, **caractérisée en ce que** la proportion de la masse totale de la résine de silicone et éventuellement d'au moins un silane à faible masse moléculaire, par rapport à la masse totale du système de fixation par résine synthétique multi- ou monocomposant, est de 10 à 50 % en poids, et/ou que la résine de silicone, par rapport à la masse combinée de la résine de silicone et d'au moins un silane actif à faible masse moléculaire, est éventuellement additionnée de 0,5 à 2 % en poids du silane à faible masse moléculaire.

7. Utilisation selon l'une des revendications 1 à 6, **caractérisée en ce qu'**il contient un ou plusieurs autres additifs usuels.

8. Utilisation de la résine synthétique de fixation selon l'une des revendications 1 à 7 sous forme d'une résine synthétique de fixation multicomposants.

9. Utilisation de la résine synthétique de fixation selon l'une des revendications 1 à 7 sous forme d'une résine synthétique de fixation bicomposants.

10. Utilisation d'une résine synthétique de fixation selon l'une des revendications 1 à 9 sous forme d'une résine synthétique de fixation monocomposant.

11. Utilisation d'une résine synthétique de fixation selon l'une des revendications 1 à 10 pour la fixation d'un élément d'ancrage dans un trou de perçage aménagé dans un substrat de construction.

12. Utilisation selon la revendication 11 d'une résine synthétique de fixation monocomposant, le substrat de construction étant un substrat de construction résistant à l'eau.

13. Utilisation selon la revendication 11 d'une résine synthétique de fixation monocomposant, le substrat de construction étant un substrat de construction résistant à l'eau, constitué de brique ou de béton.

14. Procédé de fixation d'un élément d'ancrage dans un trou aménagé dans un substrat de construction présentant une paroi de trou résistante à l'eau, dans lequel, simultanément ou successivement, l'élément d'ancrage et une résine synthétique de fixation, tels que définis dans l'une des revendications 1 à 10, sont insérés dans le trou, la résine synthétique de fixation étant laissée durcir.

15. Procédé selon la revendication 14, dans lequel le substrat de construction est un substrat de construction en brique ou en béton.
